(19) Europäisches Patentamt
European Patent Office
Office européen des brevets

(11) EP 4 332 173 B1

(12) **EUROPEAN PATENT SPECIFICATION**

(45) Date of publication and mention of the grant of the patent:
**17.06.2026 Bulletin 2026/25**

(21) Application number: **23799480.1**

(22) Date of filing: **28.04.2023**

(51) International Patent Classification (IPC):
***C08L 101/02*** *(2006.01)* ***C08G 81/00*** *(2006.01)*
***C08G 65/337*** *(2006.01)*

(52) Cooperative Patent Classification (CPC):
**C08G 81/00; C08G 65/337**

(86) International application number:
**PCT/JP2023/016921**

(87) International publication number:
**WO 2023/214550 (09.11.2023 Gazette 2023/45)**

(54) **POLYMER MATERIAL HAVING PHASE SEPARATION STRUCTURE OBTAINED BY CONTROLLING NUMBER OF BRANCHES**

POLYMERMATERIAL MIT PHASENTRENNUNGSSTRUKTUR DURCH STEUERUNG DER ANZAHL VON VERZWEIGUNGEN

MATÉRIAU POLYMÈRE AYANT UNE STRUCTURE DE SÉPARATION DE PHASE OBTENUE PAR RÉGULATION DU NOMBRE DE RAMIFICATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.05.2022 JP 2022076349**

(43) Date of publication of application:
**06.03.2024 Bulletin 2024/10**

(73) Proprietors:
- **The University of Tokyo**
  **Bunkyo-ku, Tokyo 113-8654 (JP)**
- **Gellycle Co., Ltd.**
  **Tokyo 113-0033 (JP)**

(72) Inventors:
- **SAKAI, Takamasa**
  **Tokyo 113-8654 (JP)**
- **NAITO, Mitsuru**
  **Tokyo 113-8654 (JP)**
- **KATASHIMA, Takuya**
  **Tokyo 113-8654 (JP)**
- **MASUI, Kosuke**
  **Tokyo 113-0033 (JP)**
- **KAMATA, Hiroyuki**
  **Tokyo 113-0033 (JP)**

(74) Representative: **Symbiosis IP Limited**
**The Innovation Centre**
**217 Portobello**
**Sheffield, South Yorkshire S1 4DP (GB)**

(56) References cited:
**WO-A1-2022/092043**
**CN-A- 109 575 269**
**CN-A- 109 721 744**
**CN-A- 111 138 687**
**CN-A- 112 851 983**
**JP-A- 2012 500 208**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 332 173 B1

## Description

Technical Field

The present invention relates to an associative polymer material in which a liquid-liquid phase-separated structure is induced by controlling the number of branches in a polymer unit, bonding property, and the like.

Background Art

A general slime is a substance in which polymers form an association point by supramolecular interaction (ionic bond, hydrophobic functional group, dynamic covalent bond) and form a transient three-dimensional network structure in a solvent such as water. Since the association point has a finite life, the slime is a liquid material having both viscosity and elasticity, unlike a polymer material having a similar composition.

Therefore, a slime-like polymer has been used as a rheology control agent for foods and cosmetics, and studied as an injectable in-vivo tamponade or a drug carrier (for example, Non-Patent Literatures 1 and 2). However, the conventional slime-like polymer is compatible with a solvent, and is dissolved and decomposed by being mixed with the solvent in a liquid in the body or the like, and has a problem in its stable storage property.

Various polymers for use in medical applications (e.g., as carriers or in self-healing applications) are known from e.g., Patent Literatures 1, 2, 3, 4 and 5. Additionally, Patent Literature 6 discloses a hydrogel electrostatic spray film. However, none of these documents disclose a non-gelled polymer material according to the present invention, as described below.

Citation List

Patent Literature

Patent Literature 1: JP2012500208
Patent Literature 2: CN109575269
Patent Literature 3: , CN109721744
Patent Literature 4: CN111138687
Patent Literature 5: WO2022092043
Patent Literature 6: CN112851983

Non Patent Literature

Non Patent Literature 1: Rainer G et al. Br J Ophthalmol, 85:139-142, 2001
Non Patent Literature 2: Ooki T et al. Developmental Cell, 49, 590-604, 2019

Summary of Invention

Technical Problem

Therefore, an object of the present invention is to provide a novel artificial slime-like polymer material having stability against an external solvent without changing the chemical composition of a main chain skeleton, a solvent, and the like constituting the polymer material and without impairing the viscosity and elasticity of the slime-like material.

Solution to Problem

As a result of intensive studies to solve the above problems, the present inventors have found that by controlling the number of branches, terminal connectivity, and concentration of polymer units constituting the polymer material, it is possible to provide a slime-like polymer material that induces liquid-liquid phase separation and thereby control solubility in external solvents, leading to the completion of this invention.

The present invention in its various aspects is as set out in the accompanying claims.

According to a first aspect the present invention provides:

a non-gelled polymer material containing a solvent, the non-gelled polymer material having a three-dimensional structure in which a plurality of polymer units are linked such that a first region where the polymer units are densely present and a second region where the polymer units are sparsely present are present in a phase-separated state, wherein the polymer unit includes a polymer unit A group including one or more branched polymers having a total of two or more boronic acid-containing groups in a side chain or a terminal, and a polymer unit B group including one or more branched polymers having a total of two or more diol groups in a side chain or a terminal, the average value of the number of boronic acid-containing groups per molecule present in the branched polymers of the polymer unit A group is in a range of 3 to 60, and the average value of the number of diol groups per molecule present in the branched polymers of the polymer unit B group is in a range of 3 to 1500, a total polymer concentration (c) in the polymer material is 0.1 to 100 g/L and ranges from $10^{-3}$ to 5 times an overlapping concentration (c*) of the polymer units, and when the average number of the boronic acid-containing group or the diol group bonded to another polymer unit per molecule of the polymer unit is N, N satisfies the following relational expression;

[Mathematical formula 1]

$$N > 0.02 + 4\left({}^{c}/_{c^*}\right)^{1.5}$$

In preferred embodiments, the solvent is water, and the branched polymer constituting the polymer unit A group and B group is a hydrophilic polymer.

In preferred embodiments, the branched polymer constituting the polymer unit A group and B group has a polyethylene glycol skeleton or a polyvinyl skeleton.

In preferred embodiments: at least one of the polymer unit A group and B group is composed of only bi-, tri-, tetra-, or octa-branched polyethylene glycols;

the branched polymers constituting the polymer unit A group and B group all have a molecular weight (Mw) of $5 \times 10^3$ to $1 \times 10^5$;
the boronic acid-containing group is an arylboronic acid optionally substituted with a halogen atom;
the diol group has a ring-opened structure of a saccharide derivative;
the polymer unit A group includes a combination of polymers having a total of four boronic acid-containing groups at a terminal and polymers having a total of eight boronic acid-containing groups at a terminal, and the polymer unit B group includes a combination of polymers having a total of four diol groups at a terminal and polymers having a total of eight diol groups at a terminal;
the polymer material further including a connectivity adjusting agent; and/or
a connectivity adjusting agent is selected from the group consisting of a saccharide, a saccharide derivative, and a pH adjusting agent.

According to a second aspect, the present invention provides:
a kit for forming the polymer material according to any embodiment of the first aspect, the kit including a container separately storing a first solution containing a polymer unit A group including one or more branched polymers having a total of two or more boronic acid-containing groups in a side chain or a terminal, and a second solution containing a polymer unit B group including one or more branched polymers having a total of two or more diol groups in a side chain or a terminal, wherein the average value of the number of boronic acid-containing groups per molecule present in the branched chain polymers of the polymer unit A group is in a range of 3 to 60, and the average value of the number of diol groups per molecule present in the branched chain polymers of the polymer unit B group is in a range of 3 to 1500, and the total polymer concentration (c) in the first and second solutions is 0.1 to 100 g/L and ranges from $10^{-3}$ to 5 times the overlapping concentration (c*) of the polymer units.

In preferred embodiments: at least one of the first and second solutions can further contain a connectivity adjusting agent; and/or the connectivity adjusting agent is selected from the group consisting of a saccharide, a saccharide derivative, and a pH adjusting agent.

According to a third aspect, the present invention provides a method for producing the polymer material according to any embodiment of the first aspect, the method including a step of mixing a polymer unit A group including one or more branched polymers having a total of two or more boronic acid-containing groups in a side chain or a terminal, a polymer unit B group including one or more polymers having a total of two or more diol groups in a side chain or a terminal, and a solvent to prepare a polymer solution, wherein the average value of the number of functional groups per molecule present in the branched chain polymers of the polymer unit A group is in a range of 3 to 60, and the average value of the number of functional groups per molecule present in the branched chain polymers of the polymer unit B group is in a range of 3 to 1500, the polymer concentration (c) in the polymer solution is 0.1 to 100 g/L and ranges from $10^{-3}$ to 5 times the

overlapping concentration (c*) of the polymer units, and when the average number of the boronic acid-containing group or the diol group bonded to another polymer unit per molecule of the polymer unit is N, N satisfies the following relational expression.

[Mathematical formula 2]

$$N > 0.02 + 4\left(c/c^*\right)^{1.5}$$

Advantageous Effects of Invention

Conventional slime-like polymers are compatible with water as a solvent, and are dissolved and decomposed when mixed with a body fluid in a living body, so that required properties cannot be exhibited for a long period of time. On the other hand, the polymer material of the present invention can dramatically improve stability while maintaining the characteristics of the slime-like polymer. Therefore, the polymer material of the present invention leads to the design of a novel biomaterial.

Brief Description of Drawings

FIG. 1 is a phase diagram of a slime. The vertical axis represents an average number N of polymer units bonded to other polymer units per molecule of the polymer units, and the horizontal axis represents a value obtained by normalizing polymer concentrations by overlapping concentrations. Example 1: The result of mixing 8-branched PEG-FPBA and 8-branched PEG-GDL and controlling the bonding property by the addition amount of sorbitol (O: Phase-separated structure formation, ×: Single phase without phase separation). Example 2: The result of controlling the bonding property by mixing 8-branched PEG-FPBA, 8-branched PEG-GDL, 4-branched PEG-FPBA, and 4-branched PEG-GDL (•: Phase-separated structure formation, +: Single phase without phase separation). Example 3: The result of controlling the bonding properties by mixing the multi-branched PEG-FPBA and the multi-branched PEG-GDL (symbol + in ○: phase-separated structure formation).

FIG. 2 is an observation image of a sample subjected to fluorescence modification with a confocal microscope.

Description of Embodiments

Hereinafter, embodiments of the present invention will be described.

1. Polymer material of the present invention

A polymer material of the present invention is a slime-like associative polymer which is not gelled (that is, a non-gelled state), and is an associative polymer material having a three-dimensional structure in which a plurality of polymer units are linked such that two phases having different polymer concentrations, that is, a concentrated phase (first region) in which the polymer units are densely present and a dilute phase (second region) in which the polymer units are sparsely present, are present in a phase-separated state. The present invention is characterized in that a slime-like polymer material in which liquid-liquid phase separation is induced is obtained by controlling the number of branches, the terminal connectivity, the concentration, and the like of the polymer unit.

Since the polymer material has such a unique phase-separated structure, the polymer material of the present invention further satisfies the following requirements.

1) a polymer unit constituting a polymer material includes a polymer unit A group including one or more branched polymers having a total of two or more boronic acid-containing groups in a side chain or a terminal, and a polymer unit B group including one or more branched polymers having a total of two or more diol groups in a side chain or a terminal;
2) the number-average number of functional groups of boronic acid-containing group per molecule in the polymer unit A group is in a range of 3 to 60, and the number-average number of functional groups of diol group per molecule in the polymer unit B group is in a range of 3 to 1500;
3) the total polymer concentration (c) in the polymer material is 0.1 to 100 g/L and ranges from $10^{-3}$ to 5 times the overlapping concentration (c*) of the polymer units; and
4) when the average number of the boronic acid-containing group or the diol group bonded to another polymer unit per molecule of the polymer unit is N, N satisfies the following relational expression.

[Mathematical formula 3]

$$N > 0.02 + 4\left({}^{c}/_{c^*}\right)^{1.5}$$

The polymer material of the present invention is characterized in that a three-dimensional network structure and porous structure are formed by this phase separation, and the mesh size is on the order of μm. Here, the first region is referred to as a "concentrated phase" in the relative meaning that the concentration (density) of the polymer units present in the first region is larger than the density in the second region. Preferably, the first region has a concentration (density) of about three times or more that of the second region.

Hereinafter, the polymer unit constituting the polymer material of the present invention and the properties of the polymer material will be described in more detail.

(1-1) Polymer unit

The polymer units constituting the polymer material of the present invention can form a non-gel polymer material by being linked to each other, and more specifically, in the final polymer material, the polymer units can form an association having a network structure, particularly a three-dimensional network structure by being linked via a chemical bond by an equilibrium reaction. Such polymer units are preferably hydrophilic polymers.

The polymer unit used in the present invention is a combination of a polymer unit A group including one or more branched polymers having a total of two or more boronic acid-containing groups in a side chain or a terminal and a polymer unit B group including one or more branched polymers having a total of two or more diol groups in a side chain or a terminal. Here, the total of the boronic acid-containing group and the diol group is preferably 5 or more. It is more preferable that these functional groups are present at the terminal. For example, when the polymer unit A group has a bi-, tri-, tetra-, or octa-branched structure, it preferably has a boronic acid-containing group at each branched terminal, and when the polymer unit B group has a bi-, tri-, tetra-, or octa-branched structure, it preferably has a diol group at each branched terminal. In the present specification, a so-called linear polymer is also included in the term "branched polymer" as a bi-branched polymer.

In addition, in the present specification, the terms "A group" and "B group" are used in the sense that they may each include a plurality of polymer units having different structures, and include not only the case of a combination of a plurality of polymer units but also the case of being composed of only one polymer unit.

In a preferred aspect, the polymer unit A group can include a combination of polymers having a total of four boronic acid-containing groups at a terminal and polymers having a total of eight boronic acid-containing groups at a terminal; and the polymer unit B group can include a combination of polymers having a total of four diol groups at a terminal and polymers having a total of eight diol groups at a terminal.

As the hydrophilic polymer, a polymer having affinity for water known in the art can be used, but is preferably a biocompatible polymer having a polyalkylene glycol skeleton or a polyvinyl skeleton.

Examples of the polymer having a polyalkylene glycol skeleton preferably include polymer species having a plurality of branches of a polyethylene glycol skeleton, and particularly, bi-, tri-, tetra-, or octa-branched polyethylene glycols are preferable. A polymer material composed of a tetra-branched polyethylene glycol skeleton is generally known as a Tetra-PEG polymer material, and is known to have a network structure network constructed by an AB-type cross-end coupling reaction between tetra-branched polymers each having two or more kinds of functional groups capable of reacting with each other at the terminal (Matsunaga et al., Macromolecules, Vol. 42, No. 4, pp. 1344 -1351, 2009). In addition, the Tetra-PEG polymer material can be easily prepared in situ by simple two-liquid mixing of each polymer solution, and it is also possible to control the polymer materialization time by adjusting the pH and ionic strength during preparation of the polymer material. In addition, since the polymer material contains PEG as a main component, the polymer material is also excellent in biocompatibility.

Examples of the hydrophilic polymer having a polyvinyl skeleton include polyalkyl methacrylates such as polymethyl methacrylate, polyacrylates, polyvinyl alcohols, poly N-alkyl acrylamides, and polyacrylamides.

In a preferred aspect, the branched polymers constituting the polymer unit A group and B group are hydrophilic polymers. The branched polymer constituting the polymer unit A group and B group may have a polyethylene glycol skeleton or a polyvinyl skeleton. Alternatively, at least one of the branched polymers constituting the polymer unit A group and B group can be independently composed of only bi-, tri-, tetra-, or octa-branched polyethylene glycols. For example, it is also possible to use a combination in which the polymer unit A group is composed of tetra-branched polyethylene glycol and the polymer unit B group is polyvinyl alcohol.

The hydrophilic polymer has a weight average molecular weight (Mw) in the range of $5 \times 10^3$ to $1 \times 10^5$, preferably in the range of $1 \times 10^4$ to $5 \times 10^4$. Preferably, the branched polymers constituting the polymer unit A group and B

group all have a molecular weight (Mw) of $5 \times 10^3$ to $1 \times 10^5$.

When the polymer unit A group and B group have such a boronic acid-containing group and a diol group, as exemplified in the following equilibrium reaction scheme, the boronic acid site and the OH group of the diol chemically react with each other to obtain the polymer material of the present invention having a structure in which polymer units are linked and associated with each other. The specific structures of the boronic acid-containing group and the diol group shown in the reaction scheme are merely examples and are not limited thereto, and other types of boronic acid-containing groups and diol groups may be used as described later.

[Mathematical formula 4]

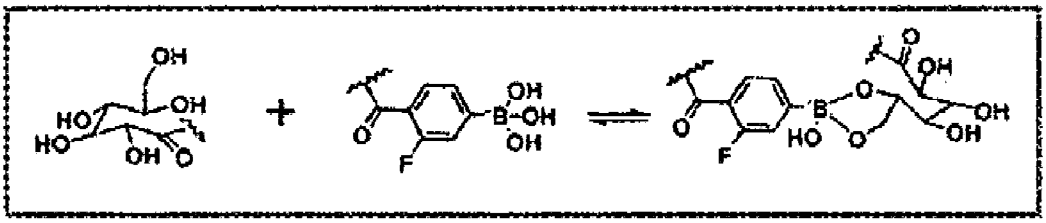

Diol group Boronic acid-containing group

The boronic acid-containing group present in the polymer unit A group is not particularly limited as long as it has a structure having a boronic acid, and can be, for example, an arylboronic acid, preferably an arylboronic acid that may be substituted with a halogen atom. As the arylboronic acid, phenylboronic acid is preferable. The boronic acid-containing groups may be the same or different, but are preferably the same. When the functional groups are the same, reactivity with the diol group becomes uniform, and a polymer material having a uniform structure is easily obtained.

The diol group present in the polymer unit B group is not particularly limited as long as it is a functional group having two or more hydroxyl groups (OH groups) such as 1,2-diol and 1,3-diol, and can be a saccharide or a saccharide derivative. A sugar alcohol having a structure derived from a sugar, preferably a sugar alcohol having a ring-opened structure of a saccharide derivative can be used. Such a saccharide may be any of a monosaccharide, a disaccharide, and a polysaccharide, but can typically be a monosaccharide such as glucose or fructose. In addition, the diol group may be an aromatic diol group or an aliphatic diol group, and may be a diol group in which one or more carbons in the molecule are substituted with a hetero atom. The diol groups may be the same or different, but are preferably the same. When the functional groups are the same, reactivity with the boronic acid-containing group becomes uniform, and a polymer material having a uniform structure is easily obtained.

As described above, the number-average number of functional groups of the boronic acid-containing group per molecule in the polymer unit A group is in the range of 3 to 100, preferably in the range of 3 to 60. Further, the number-average number of functional groups of diol group per molecule in the polymer unit B group is in the range of 3 to 1500, preferably in the range of 3 to 100, and more preferably in the range of 3 to 60. By setting the number of such functional groups within a predetermined range and setting the polymer unit concentration so as to satisfy the formula of the average number of bonds N described later, a desired phase-separated structure is obtained. Here, the "number-average number of functional groups" is an average value of the number of boronic acid-containing groups or diol groups per molecule of the branched polymer included in the polymer unit A group or B group.

Preferable non-limiting specific examples of the branched polymer constituting the polymer unit A group include a compound represented by the following formula (I) having four branches of a polyethylene glycol skeleton and having a boronic acid-containing group at each terminal.

[Chemical Formula 1]

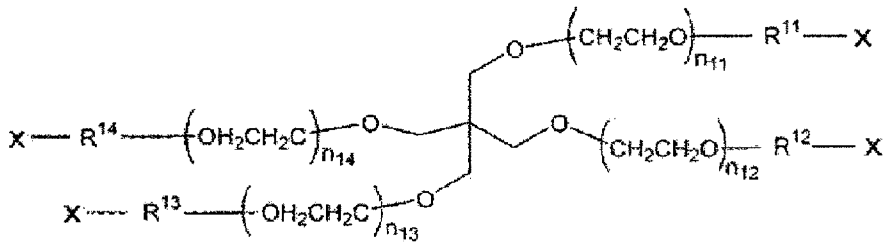

(I)

In the formula (I), X is a boronic acid-containing group, and in a preferred embodiment, X can be a phenylboronic acid-containing group or a fluorophenylboronic acid-containing group having the following structure (in the partial structure, the wavy line portion is a connection portion to $R^{11}$ to $R^{14}$.).

[Chemical Formula 2]

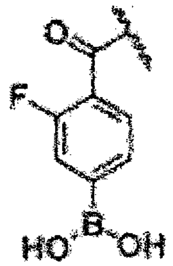

PEG-FPBA

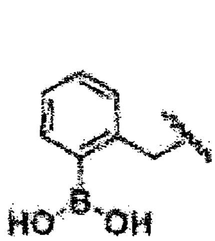

PEG-APBA

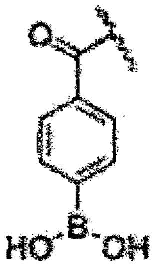

PEG-PBA

, , ,

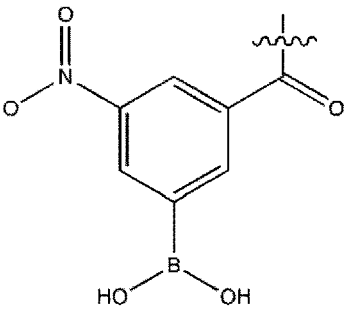

,

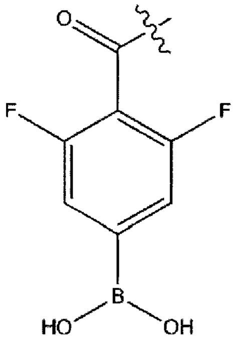

,

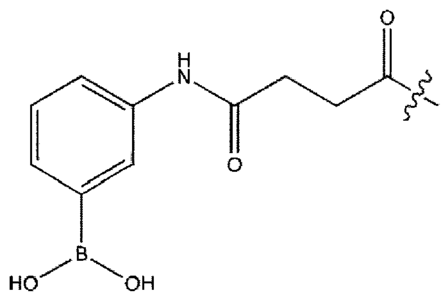

In the formula (I), $n_{11}$ to $n_{14}$ may be the same or different. As the values of $n_{11}$ to $n_{14}$ are closer, a uniform three-dimensional structure can be obtained, and the strength becomes higher. Therefore, in order to obtain a high-strength polymer material, $n_{11}$ to $n_{14}$ are preferably the same. When the values of $n_{11}$ to $n_{14}$ are too high, the strength of the polymer material becomes weak, and when the values of $n_{11}$ to $n_{14}$ are too low, the polymer material is hardly formed due to steric hindrance of the compound. Therefore, examples of $n_{11}$ to $n_{14}$ include an integer value of 25 to 250, preferably 35 to 180, more preferably 50 to 115, and particularly preferably 50 to 60.

In the formula (I), $R^{11}$ to $R^{14}$ are the same or different, and each represent a linker moiety connecting a functional group and a core portion. $R^{11}$ to $R^{14}$ may be the same or different, but are preferably the same in order to produce a high-strength polymer material having a uniform three-dimensional structure. $R^{11}$ to $R^{14}$ each represent a direct bond, a $C_1$-$C_7$ alkylene group, a $C_2$-$C_7$ alkenylene group, -NH-$R^{15}$-, -CO-$R^{15}$-, -$R^{16}$-O-$R^{17}$-, -$R^{16}$-NH-$R^{17}$-, -$R^{16}$-$CO_2$-$R^{17}$-, -$R^{16}$-$CO_2$-NH-$R^{17}$-, -$R^{16}$-CO-$R^{17}$-, or -$R^{16}$-CO-NH-$R^{17}$-. Here, $R^{15}$ represents a $C_1$-$C_7$ alkylene group. $R^{16}$ represents a $C_1$-$C_3$ alkylene group. $R^{17}$ represents a $C_1$-$C_5$ alkylene group.

Here, the "$C_1$-$C_7$ alkylene group" means an alkylene group having 1 or more and 7 or less carbon atoms which optionally have a branch, and means a linear $C_1$-$C_7$ alkylene group or a $C_2$-$C_7$ alkylene group having one or more branches

(the number of carbon atoms including the branch is 2 or more and 7 or less). Examples of the $C_1$-$C_7$ alkylene group are a methylene group, an ethylene group, a propylene group, and a butylene group. Examples of $C_1$-$C_7$ alkylene groups include $-CH_2-$, $-(CH_2)_2-$, $-(CH_2)_3-$, $-CH(CH_3)-$,$-(CH_2)_3-$, $-(CH(CH_3))_2-$, $-(CH_2)_2-CH(CH_3)-$, $-(CH_2)_3CH(CH_3)-$,$-(CH_2)_2-CH(C_2H_5)-$, $-(CH_2)_6-$, $-(CH_2)_2-C(C_2H_5)_2-$, and$-(CH_2)_3C(CH_3)_2CH_2-$.

The "$C_2$-$C_7$ alkenylene group" is a linear or branched alkenylene group having 2 to 7 carbon atoms and 1 or 2 or more double bonds in the chain, and examples thereof include a divalent group having a double bond formed by excluding 2 to 5 hydrogen atoms of adjacent carbon atoms from the alkylene group.

On the other hand, preferable non-limiting specific examples of the branched polymer constituting the polymer unit B group include a compound represented by the following formula (II) having four branches of a polyethylene glycol skeleton and having a diol group at each terminal.

[Chemical Formula 3]

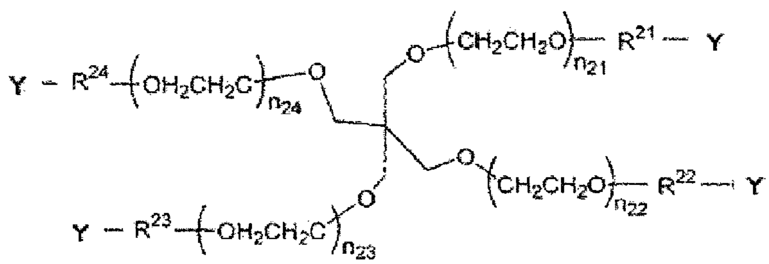

(II)

In the formula (I), Y is a diol group, and in a preferred embodiment, Y can be a group having the following structure (in the partial structure, the wavy line portion is a connection portion to $R^{21}$ to $R^{24}$.).

[Chemical Formula 4]

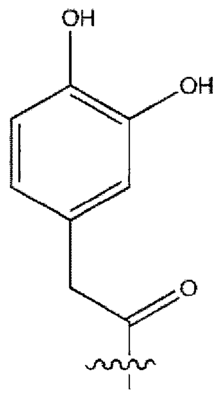

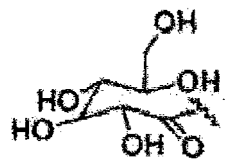

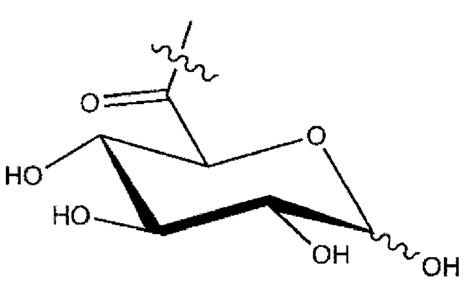

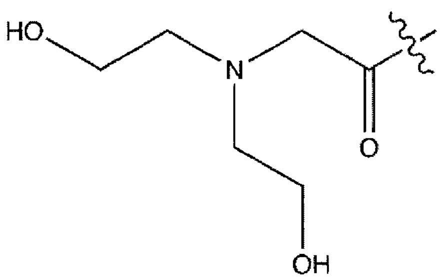

In the above formula (II), $n_{21}$ to $n_{24}$ may be the same or different. As the values of $n_{21}$ to $n_{24}$ are closer, the polymer material can have a uniform three-dimensional structure, resulting in high strength, and thus it is preferable, and it is preferable that the values are the same. When the values of $n_{21}$ to $n_{24}$ are too high, the strength of the polymer material becomes weak, and when the values of $n_{21}$ to $n_{24}$ are too low, the polymer material is hardly formed due to steric hindrance of the compound. Therefore, examples of $n_{21}$ to $n_{24}$ include an integer value of 5 to 300, preferably 20 to 250, more preferably 30 to 180, still more preferably 45 to 115, and still more preferably 45 to 55.

In the above formula (II), $R^{21}$ to $R^{24}$ represent a linker moiety connecting a functional group and a core portion.

$R^{21}$ to $R^{24}$ may be the same or different, but are preferably the same in order to produce a high-strength polymer material having a uniform three-dimensional structure. In the formula (II), $R^{21}$ to $R^{24}$ are the same or different and each represent a direct bond, a $C_1$-$C_7$ alkylene group, a $C_2$-$C_7$ alkenylene group, -NH-$R^{25}$-, -CO- $R^{25}$-, -$R^{26}$-O-$R^{27}$-, -$R^{26}$-NH-$R^{27}$-, -$R^{26}$-$CO_2$-$R^{27}$-, -$R^{26}$-$CO_2$-NH-$R^{27}$-, -$R^{26}$-CO-$R^{27}$-, or -$R^{26}$-CO-NH-$R^{27}$-. Here, $R^{25}$ represents a $C_1$-$C_7$ alkylene group. $R^{26}$ represents a $C_1$-$C_3$ alkylene group. $R^{27}$ represents a $C_1$-$C_5$ alkylene group.

In the present specification, the alkylene group and the alkenylene group optionally have one or more optional substituents. Examples of the substituent include, but are not limited to, an alkoxy group, a halogen atom (may be any of a fluorine atom, a chlorine atom, a bromine atom, and an iodine atom), an amino group, a mono- or disubstituted amino group, a substituted silyl group, an acyl group, or an aryl group. When the alkyl group has two or more substituents, they may be the same or different. The same applies to alkyl moieties of other substituents including alkyl moieties (for example, alkyloxy groups and aralkyl groups) .

In addition, in the present specification, when a certain functional group is defined as "optionally having a substituent", the type of the substituent, the substitution position, and the number of substituents are not particularly limited, and when having two or more substituents, they may be the same or different. Examples of the substituent include, but are not limited to, an alkyl group, an alkoxy group, a hydroxyl group, a carboxyl group, a halogen atom, a sulfo group, an amino group, an alkoxycarbonyl group, and an oxo group. Substituents may be further present in these substituents.

(1-2) Polymer unit concentration and connectivity

In the polymer material of the present invention, the total concentration ($c_1$) of the polymer unit A group and B group is 1 to 200 g/L, preferably 5 to 100 g/L. At the same time, the total concentration $c_1$ is in the range of 0.02 to 3 times the overlapping concentration ($c_1$*) of the polymer units, preferably in the range of 0.1 to 2.

Here, the "overlapping concentration" (also called "overlap concentration") is a concentration at which polymers in a solvent start to spatially come into contact with each other, and in general, the overlap concentration c* is represented by the following expression.

[Mathematical formula 5]

$$c^* = 3M_w / (4\pi \cdot \alpha \cdot N_A \cdot R_g{}^3)$$

(wherein $M_w$ is the weight average molecular weight of the polymer; $\alpha$ is the relative density of the solvent; $N_A$ is the Avogadro constant; $R_g$ is the radius of gyration of the polymer.).

For a method of calculating the overlap concentration c*, for example, Polymer Physics (M. Rubinstein, R. Colby) can be referred to. Specifically, for example, the overlap concentration can be determined by measuring the viscosity of a dilute solution using the Flory-Fox Equation.

In addition, the polymer material of the present invention is characterized in that the connectivity between polymer units is within a predetermined range. As a result, a desired phase-separated structure is obtained. More specifically, when the average number of boronic acid-containing groups or diol groups bonded to another polymer unit per molecule of the polymer unit is N, N satisfies the following relational expression.

[Mathematical formula 6]

$$N > 0.02 + 4\left({}^{c}/_{c^*}\right)^{1.5}$$

Here, as described below, the bonding average number N can be calculated using an equilibrium constant in a reaction between polymer units.

Using the equilibrium constant K in the reaction between the polymer unit A group and B group, the network connectivity p, which is the ratio of the number of linked bonds and the total number of reactive functional groups (that is, boronic acid-containing groups and diol groups) in the equilibrium state, can be calculated. Here, the bond formation between the polymer units is a secondary reaction. Thus, the kinetics of bond formation can be expressed as follows.

[Mathematical formula 7]

$$\frac{dn_{\mathrm{bond}}}{dt} = k_{\mathrm{a}}(n_{\mathrm{F},0} - n_{\mathrm{bond}})(n_{\mathrm{G},0} - n_{\mathrm{bond}}) - k_{\mathrm{d}} n_{\mathrm{bond}} \qquad \text{(S11)}$$

Here, $n_{bond}$ is the molar concentration of the bond, and $n_{F,0}$ and $n_{G,0}$ are the initial concentrations of the polymer unit A group and the polymer unit B group, respectively.

At equilibrium, association and dissociation are balanced ($dn_{bond}/dt = 0$). Therefore, when equation (s11) is rewritten, $n_{bond}$ is expressed as follows.

[Mathematical formula 8]

$$n_{\mathrm{bond}} = \frac{1}{2}\left(n_{\mathrm{F,0}} + n_{\mathrm{G,0}} + \frac{1}{K}\right) - \frac{1}{2}\left[\left(n_{\mathrm{F,0}} + n_{\mathrm{G,0}} + \frac{1}{K}\right)^2 - 4n_{\mathrm{F,0}}n_{\mathrm{G,0}}\right]^2 \qquad \text{(S12)}$$

Here, the network connectivity p can be expressed as follows.

[Mathematical formula 9]

$$p = \frac{n_{\mathrm{bond}}}{n_{\mathrm{F,0}} + n_{\mathrm{G,0}}} \qquad \text{(S13)}$$

For example, when the boronic acid-containing group in the polymer unit A group and the diol group in the polymer unit B group are mixed so as to be in equal amount ($n_{F,0} = n_{G,0} = 1/2\ C_{end}$), p is expressed as follows from the equation (S12) and the equation (S13).

[Mathematical formula 10]

$$p = \left(1 + \frac{1}{C_{\mathrm{end}}K}\right) - \left[\left(1 + \frac{1}{C_{\mathrm{end}}K}\right)^2 - 1\right]^{\frac{1}{2}} \qquad \text{(S14)}$$

On the other hand, when the boronic acid-containing group and the diol group are mixed in non-equal amounts ($n_{F,0}/(n_{F,0} + n_{G,0}) = s$, $n_{F,0} + n_{G,0} = C_{end}$), it can be expressed as follows.

[Mathematical formula 11]

$$p = \left(1 + \frac{1}{C_{\mathrm{end}}K}\right) - \left[\left(1 + \frac{1}{C_{\mathrm{end}}K}\right)^2 - 4s(1-s)\right]^{\frac{1}{2}} \qquad \text{(S14')}$$

Using the above equation, the average number (N) of bonded reactive functional groups per molecule of a polymer unit having the number (f) of branches in an actual system can be calculated as follows.

[Mathematical formula 12]

$$N = pf = f\left(1 + \frac{1}{C_{\mathrm{end}}K}\right) - \left[\left(1 + \frac{1}{C_{\mathrm{end}}K}\right)^2 - 4s(1-s)\right]^{\frac{1}{2}} \qquad \text{(S14'')}$$

(1-3) Connectivity adjusting agent

In a preferred embodiment, a connectivity adjusting agent can be further included in order to set the above-described bonding average number N to an appropriate range. Such a connectivity adjusting agent roughly includes (1) a compound that can inhibit the bonding between polymer units to some extent, and (2) a compound that can adjust the surrounding environment that affects the bonding between polymer units.

Examples of the compound (1) capable of inhibiting the bonding between polymer units to some extent include saccharides such as glucose and saccharide derivatives such as sorbitol. Further, examples of the compound (2) capable

of adjusting the surrounding environment include a pH adjusting agent. As such a pH adjusting agent, a pH buffering agent known in the art can be used.

The addition amount of the connectivity adjusting agent can be appropriately adjusted, and for example, when a saccharide derivative is used, it can be in the range of 0.1 to 50 in terms of molar ratio with respect to the monomer unit B group.

(1-4) Physical properties and the like of polymer material

The polymer material of the present invention contains a solvent and has a polymer content of 200 g/L or less, preferably 150 g/L or less, more preferably 100 g/L or less. The lower limit value of the polymer content is not particularly limited, but the lower limit value is preferably 0.1 g/L or more from the viewpoint of obtaining desired physical properties such as viscosity.

The polymer material of the present invention has a porous structure in the order of μm and an aggregate structure due to a phase-separated structure. Specifically, the mesh size constituted by the first regions can be 1 to 500 μm, and is preferably 10 to 100 μm. The mesh size means the length of the long side in the mesh unit (that is, the hole) in which the outer periphery is formed by the first region in a concentrated phase. Alternatively, in a case where the mesh unit is substantially circular, the mesh unit may have a length of a diameter thereof. The second region in a dilute phase, and/or the solvent are present inside the mesh unit. Alternatively, there is an aggregated concentrated phase with a pore size of 1 to 500 μm, preferably 10 to 100 μm, in the dilute phase.

Typically, the first region in a concentrated phase has a polymer concentration of 1 to 20 wt%, based on the entire gel containing the solvent, and the second region in a dilute phase has a polymer concentration of 0 to 3 wt%. Preferably, the first region has a polymer concentration of 1 to 10 wt% and the second region has a polymer concentration of 0.01 to 2 wt%.

As the solvent contained in the polymer material of the present invention, any solvent can be used as long as the associate formed by the polymer unit is dissolved, but typically, water or an organic solvent can be used. As the organic solvent, alcohols such as ethanol and polar solvents such as DMSO can be used. Preferably, the solvent is water.

The polymer material of the present invention can be typically produced by mixing a raw material containing a polymer unit A group and a raw material containing a polymer unit B group. When a solution containing a polymer unit is used as a raw material, the concentration, addition rate, mixing rate, and mixing ratio of each solution are not particularly limited, and can be appropriately adjusted by those skilled in the art. As described above, water, alcohols such as ethanol, DMSO, and the like can be used as the solvent of the solution. When the solution is an aqueous solution, an appropriate pH buffer such as a phosphate buffer can be used. Preferably, the polymer material of the present invention can be prepared by using a kit described below.

(1-5) Kit and production method

In another aspect, the present invention relates to a kit for forming the polymer material and a method for producing the polymer material.

Such a kit includes a container separately storing a first solution containing a polymer unit A group composed of one or more branched polymers having a total of two or more boronic acid-containing groups in a side chain or a terminal; and a second solution containing a polymer unit B group composed of one or more polymers having a total of two or more diol groups in a side chain or a terminal, in which

the number-average number of functional groups per molecule in the polymer unit A group is in a range of 3 to 60, and the number-average number of functional groups per molecule in the polymer unit B group is in a range of 3 to 1500.

Here, the polymer units in the two solutions are set in the following concentration ranges. The total polymer concentration (c) when the first and second solutions are mixed is 0.1 to 100 g/L and ranges from $10^{-3}$ to 5 times the overlapping concentration (c*) of the polymer units.

Thereby, the above-described polymer material of the present invention can be obtained in-situ by mixing the first and second solutions. Details of the types and the like of the polymer unit A group and B group are as described above.

In a preferred aspect, at least one of the first and second solutions can further contain a connectivity adjusting agent. The details of the type and the like of the connectivity adjusting agent are as described above.

The solvent in the first and second solutions is water, but in some cases, can be a mixed solvent containing alcohols such as ethanol and other organic solvents. Preferably, these polymer solutions are aqueous solutions using water as a sole solvent. The volume of each polymer solution can be appropriately adjusted according to the area of the affected part or the like to which they are applied, the complexity of the structure, and the like, and is typically in the range of 0.1 to 20 ml, and preferably 1 to 10 ml.

The pH of each polymer solution typically ranges from 4 to 8, and preferably ranges from 5 to 7. For adjusting the pH of the polymer solution, a pH buffering agent known in the art can be used. For example, the pH can be adjusted to the

above range by using a citric acid-phosphate buffer (CPB) and changing the mixing ratio of citric acid and disodium hydrogen phosphate.

As a means for mixing these polymer solutions, for example, a two-liquid mixing syringe as disclosed in the international publication WO2007/083522 can be used. The temperature of the two liquids at the time of mixing is not particularly limited as long as the polymer units are each dissolved and the respective liquids have fluidity. For example, the temperatures of the two liquids may be different, but it is preferable that the temperatures are the same because the two liquids are easily mixed.

In some cases, as the container in the kit of the present invention, an instrument such as a sprayer storing a polymer solution can be used. As the sprayer, a known sprayer in the art can be appropriately used, and a medical sprayer is preferable.

In another aspect, the present invention also relates to a method for producing the above-described polymer material. The production method includes a step of mixing a polymer unit A group including one or more branched polymers having a total of two or more boronic acid-containing groups in a side chain or a terminal, a polymer unit B group including one or more polymers having a total of two or more diol groups in a side chain or a terminal, and a solvent to prepare a polymer solution.

Here, the number-average number of functional groups per molecule in the polymer unit A group is in a range of 3 to 60, and the number-average number of functional groups per molecule in the polymer unit B group is in a range of 3 to 1500;

the total polymer concentration (c) in the polymer solution is 0.1 to 100 g/L and ranges from $10^{-3}$ to 5 times the overlapping concentration (c*) of the polymer units; and

when the average number of the boronic acid-containing group or the diol group bonded to another polymer unit per molecule of the polymer unit is N, N satisfies the following relational expression.

[Mathematical formula 13]

$$N > 0.02 + 4\left({}^{c}/_{c^*}\right)^{1.5}$$

In a preferred aspect, at least one of the first and second solutions can further contain a connectivity adjusting agent. Alternatively, the production method of the present invention may include a step of separately adding a third solution containing a connectivity adjusting agent.

Details of each polymer unit and the connectivity adjusting agent are as described above.

## Examples

Hereinafter, the present invention will be described in more detail with reference to Examples, but the present invention is not limited thereto.

### 1. Preparation of Polymer Material

### 1-1. Synthesis of Polymer unit

Tetra-PEG-GDL and Octa-PEG-GDL having a diol group (ring-opened structure of gluconolactone) at the terminal of tetra-branched or octa-branched tetrapolyethylene glycol, and Tetra-PEG-FPBA and Octa-PEG-FPBA having a fluorophenylboronic acid group at the terminal were synthesized as polymer units constituting a polymer material.

The following raw materials were used.

Tetra-PEG-$NH_2$ (Molecular weights Mw of 5k, 10k, and 20k were used; Yuka Sangyo Co., Ltd.);
Octa-PEG-$NH_2$ (Molecular weights Mw of 5k, 10k, and 20k were used; Yuka Sangyo Co., Ltd.);
4-carboxy-3-fluorophenylboronic acid (FPBA) (FUJIFILM Wako Pure Chemical Corporation);
4-(4,6-dimethoxy-1,3,5-triazin-2-yl)-4-methylmorpholinium chloride (DMT-MM) (FUJIFILM Wako Pure Chemical Corporation); and
Glucono-δ-lactone (GDL) (Tokyo Chemical Industry Co., Ltd.).

Synthesis of Tetra-PEG-GDL

Tetra-PEG-$NH_2$ having an amino group at the terminal was dissolved in methanol at a concentration of 50 mg/mL, 10 times of gluconolactone and 20 times of triethylamine were added in molar ratio to the terminal amino group of Tetra-PEG-$NH_2$, and the mixture was stirred at 35°C for 3 days. The reaction solution was transferred to a dialysis membrane (MWCO for 20k: 6-8,000, MWCO for 10k, 5k: 3,500), dialyzed with methanol for 2 days and water for 2 days, passed through a 0.45 μm syringe filter, then freeze-dried, and collected as a powder. The completion of the synthesis was confirmed by $^1$H-NMR.

Synthesis of Tetra-PEG-FPBA

Tetra-PEG-$NH_2$ was dissolved in methanol at a concentration of 50 mg/mL, 5 times FPBA and 10 times DMT-MM were added in molar ratio to the terminal amino group of Tetra-PEG-$NH_2$, and the mixture was stirred at room temperature overnight. The reaction solution was transferred to a dialysis membrane (MWCO for 20k: 6-8,000, MWCO for 10k, 5k: 3,500), dialyzed for half a day with an aqueous hydrochloric acid solution (10 mM), half a day with an aqueous sodium hydroxide solution (10 mM), half a day with a phosphate buffer (pH 7.4, 10 mM), one day with saline (100 mM), and finally one day with pure water, and passed through a 0.45 μm syringe filter, then freeze-dried, and collected as a powder. The completion of the synthesis was confirmed by $^1$H-NMR.

Using octa-branched PEG as a raw material, various polymer units having a GDL terminal and FPBA were prepared in the same manner.

Synthesis of multi-branched PEG-GDL and multi-branched PEG-FPBA

Active ester terminated Tetra-PEG-OSu (product name: SUNBRIGHT PTE-100HS; Yuka Sangyo Co., Ltd.) and amine-terminated Tetra-PEG-$NH_2$ (product name: SUNBRIGHT PTE-100PA; Yuka Sangyo Co., Ltd.) were dissolved in a phosphate buffer having a pH of 7.4 so as to be 60 g/L. Each solution was mixed at a volume ratio of 0.14:0.86 to prepare a solution immediately before gelation. This solution was dialyzed against water, and then freeze-dried to obtain a powder. The resulting powder PEG is a multi-branched (multi-branched PEG-$NH_2$) having an excess of amine terminals.

Multi-branched PEG-$NH_2$ was dissolved in methanol at a concentration of 50 mg/mL, and 10 equivalents of gluconolactone and 20 equivalents of triethylamine were added in terms of molar ratio with respect to the $NH_2$ terminal, followed by stirring at 35 °C for 3 days. The reaction solution was transferred to a dialysis membrane (MWCO for 20k: 6-8,000, MWCO for 10k, 5k: 3,500), dialyzed against methanol and deionized water for 1 day each, and filtered through a 0.45 μm syringe filter. Thereafter, the reaction solution was freeze-dried, and the reaction product was recovered as a GDL terminal-modified product (multi-branched PEG-GDL). On the other hand, the multi-branched PEG-$NH_2$ was dissolved in methanol at a concentration of 50 mg/mL, 5 equivalents of FPBA, 10 equivalents of DMT-MM in molar ratio to the $NH_2$ terminal were added and stirred at room temperature overnight. The reaction solution was transferred to a dialysis membrane (MWCO for 20k: 6-8,000, MWCO for 10k, 5k: 3,500), dialyzed for half a day with an aqueous hydrochloric acid solution (10 mM), half a day with an aqueous sodium hydroxide solution (10 mM), half a day with a phosphate buffer (pH 7.4, 10 mM), one day with saline (100 mM), and finally one day with pure water, and passed through a 0.45 μm syringe filter, and then freeze-dried to collect FPBA modified-product (multi-branched PEG-FPBA).

1-2. Synthesis of Polymer Material

A solution containing the obtained polymer unit and a solution optionally containing a saccharide derivative as a connectivity adjusting agent were prepared, and these polymer solutions were mixed to synthesize a polymer material having the composition shown in the following table.

[Table 1]

| | Diol terminal (weight average molecular weight) | Boronic acid terminal (weight average molecular weight) | Polymer content (g/L) | Saccharide derivative additive | Saccharide derivative content (molar ratio to diol group) | pH |
|---|---|---|---|---|---|---|
| Example 1 | 8-branched-PEG (20k) | 8-branched-PEG (20k) | 0.1-120 | Sorbitol | 0-32 | 7.4 |

(continued)

| | Diol terminal (weight average molecular weight) | Boronic acid terminal (weight average molecular weight) | Polymer content (g/L) | Saccharide derivative additive | Saccharide derivative content (molar ratio to diol group) | pH |
|---|---|---|---|---|---|---|
| Example 2 | 8-branched PEG (20k) + 4 branched PEG (10k) (terminal molar ratio: 0-1) | 8-branched PEG (20k) + 4 branched PEG (10k) (terminal molar ratio: 0-1) | 20-80 | None | None | 7.4 |
| Example 3 | multi-branched (58-branched) PEG (molecular weight 2800k) | multi-branched (58-branched) PEG (molecular weight 2800k) | 10-30 | None | None | 7.4 |

In Example 3, the obtained multi-branched PEG-FPBA and multi-branched PEG-GDL were dissolved at 10, 20, and 30 g/L in a phosphate buffer having a pH of 7.4, and mixed in equal amounts to obtain a polymer material. The number of branches and the molecular weight of the multi-branched PEG were estimated from the measurement of the intrinsic viscosity [η] using an Ubbelohde viscometer using the Mark-Houwink-Sakurada equation ($[\eta] = KM^{\alpha}$). K and α refer to literature values of PEG-water system (Rauschkolb et al. Biointerface Research in Applied Chemistry 2021).

2.Evaluation of phase-separated structure

FIG. 1 shows a plot of results of checking the presence or absence of formation of a phase-separated structure for the various polymer materials synthesized in the above section 1. Here, for checking of formation of a phase-separated structure, a sample subjected to fluorescence modification such as fluoroscein was observed with a confocal laser microscope (LSM800, manufactured by Zeiss) at an excitation wavelength of 498 nm and an observation wavelength of 598 nm, and the sample in which a structure (that is, structures indicated by different colors on the acquired image) of 5 μm or more was confirmed as a phase-separated structure (FIG. 2).

Synthesis of fluorescence-modified sample

Tetra-PEG-$NH_2$ or Octa-PEG-$NH_2$ (molecular weights Mw of 5k, 10k, and 20k were used; Yuka Sangyo Co., Ltd.) was dissolved in methanol at a concentration of 50 mg/ml, reacted with 0.001 times the amount of Fluorescein isothiocyanate (FITC) (manufactured by Sigma Aldrich) to the $NH_2$ terminal, and stirred at 25°C for 1 day. Thereafter, 10 times the amount of gluconolactone and 20 equivalents of triethylamine were added to the $NH_2$ terminal, and stirred at 35°C for 3 days. The reaction solution was transferred to a dialysis membrane (MWCO for 20k: 6-8,000, MWCO for 10k, 5k: 3,500), dialyzed against methanol and deionized water for 1 day each, and filtered with a 0.45 μm syringe filter. Thereafter, the reaction solution was freeze-dried to recover the reaction product as a solid. The obtained fluorescence-modified Tetra-PEG-GDL and Octa-PEG-GDL were mixed with the Tetra-PEG-FPBA and Octa-PEG-FPBA synthesized in the above section 1 to obtain a fluorescence-modified sample. It has been confirmed that there is almost no change in physical properties due to the fluorescence modification.

In FIG. 1, the horizontal axis represents the total concentration (c) of polymer units/the overlapping concentration (c*) of polymer units; and the vertical axis represents the average number N of the boronic acid-containing group or the diol group bonded to another polymer unit per molecule of the polymer unit.

Example 1 shows the result of mixing 8-branched PEG-FPBA and 8-branched PEG-GDL and controlling the bonding property by the amount of sorbitol added. In FIG. 1, the symbol "○" indicates that a phase-separated structure was confirmed to be formed, and the symbol "×" indicates that a single phase was formed without phase separation.

Example 2 shows the result of controlling the bonding property by mixing 8-branched PEG-FPBA, 8-branched PEG-GDL, 4-branched PEG-FPBA, and 4-branched PEG-GDL. In FIG. 1, the symbol "●" indicates that a phase-separated structure was confirmed to be formed, and the symbol "+" indicates that a single phase was formed without phase separation.

Example 3 shows the result of controlling the bonding properties by mixing the multi-branched PEG-FPBA and the multi-branched PEG-GDL. The symbol with + in ○ in the upper right region in FIG. 1 indicates that a phase-separated structure is confirmed to be formed.

As a result of linear regression analysis on the plot of FIG. 1, it was found that a phase-separated structure is obtained when the following formula with c/c* as a variable is satisfied.

[Mathematical formula 14]

$$N > 0.02 + 4\left(c/c^*\right)^{1.5}$$

## Claims

1. A non-gelled polymer material containing a solvent, the non-gelled polymer material having a three-dimensional structure in which a plurality of polymer units are linked, wherein the non-gelled polymer material comprises a first region and a second region which are present in a phase-separated state, wherein the concentration of the polymer units present in the first region is greater than in the second region,

   wherein the polymer unit includes a polymer unit A group comprising one or more branched polymers having a total of two or more boronic acid-containing groups in a side chain or a terminal, and a polymer unit B group comprising one or more branched polymers having a total of two or more diol groups in a side chain or a terminal, the average value of the number of boronic acid-containing groups per molecule present in the branched polymers of the polymer unit A group is in a range of 3 to 60, and the average value of the number of diol groups per molecule present in the branched polymers of the polymer unit B group is in a range of 3 to 1500,
   a total polymer concentration (c) in the polymer material is 0.1 to 100 g/L and ranges from $10^{-3}$ to 5 times an overlapping concentration (c*) of the polymer units, wherein the overlapping concentration (c*) is determined by measuring the viscosity of a dilute solution using the Flory-Fox Equation, and
   when the average number of the boronic acid-containing group or the diol group bonded to another polymer unit per molecule of the polymer unit is N, N satisfies the following relational expression.

   [Mathematical formula 1]

   $$N > 0.02 + 4\left(c/c^*\right)^{1.5}$$

2. The polymer material according to claim 1, wherein the solvent is water, and the branched polymer constituting the polymer unit A group and B group is a hydrophilic polymer.

3. The polymer material according to claim 1, wherein the branched polymer constituting the polymer unit A group and B group has a polyethylene glycol skeleton or a polyvinyl skeleton.

4. The polymer material according to claim 1, wherein at least one of the polymer unit A group and B group is composed of only bi-, tri-, tetra-, or octa-branched polyethylene glycols.

5. The polymer material according to claim 1, wherein the boronic acid-containing group is an arylboronic acid optionally substituted with a halogen atom.

6. The polymer material according to claim 1, wherein the diol group has a ring-opened structure of a saccharide derivative.

7. The polymer material according to claim 1, wherein

   the polymer unit A group includes a combination of polymers having a total of four boronic acid-containing groups at a terminal and polymers having a total of eight boronic acid-containing groups at a terminal, and
   the polymer unit B group includes a combination of polymers having a total of four diol groups at a terminal and polymers having a total of eight diol groups at a terminal.

8. The polymer material according to claim 1, further comprising a connectivity adjusting agent.

9. The polymer material according to claim 8, wherein a connectivity adjusting agent is selected from the group consisting of a saccharide, a saccharide derivative, and a pH adjusting agent.

10. A kit for forming the polymer material according to any one of claims 1 to 9, the kit comprising:

a container separately storing
a first solution containing a polymer unit A group including one or more branched polymers having a total of two or more boronic acid-containing groups in a side chain or a terminal, and
a second solution containing a polymer unit B group including one or more branched polymers having a total of two or more diol groups in a side chain or a terminal, wherein
the average value of the number of boronic acid-containing groups per molecule present in the branched chain polymers of the polymer unit A group is in a range of 3 to 60, and the average value of the number of diol groups per molecule present in the branched chain polymers of the polymer unit B group is in a range of 3 to 1500, and
the total polymer concentration (c) in the first and second solutions is 0.1 to 100 g/L and ranges from $10^{-3}$ to 5 times the overlapping concentration (c*) of the polymer units, wherein the overlapping concentration (c*) is determined by measuring the viscosity of a dilute solution using the Flory-Fox Equation.

**11.** The kit according to claim 10, wherein at least one of the first and second solutions can further contain a connectivity adjusting agent.

**12.** The kit according to claim 11, wherein the connectivity adjusting agent is selected from the group consisting of a saccharide, a saccharide derivative, and a pH adjusting agent.

**13.** A method for producing the polymer material according to any one of claims 1 to 9, the method comprising:

a step of mixing a polymer unit A group including one or more branched polymers having a total of two or more boronic acid-containing groups in a side chain or a terminal, a polymer unit B group including one or more polymers having a total of two or more diol groups in a side chain or a terminal, and a solvent to prepare a polymer solution, wherein
the average value of the number of functional groups per molecule present in the branched chain polymers of the polymer unit A group is in a range of 3 to 60, and the average value of the number of functional groups per molecule present in the branched chain polymers of the polymer unit B group is in a range of 3 to 1500,
the polymer concentration (c) in the polymer solution is 0.1 to 100 g/L and ranges from $10^{-3}$ to 5 times the overlapping concentration (c*) of the polymer units, , wherein the overlapping concentration (c*) is determined by measuring the viscosity of a dilute solution using the Flory-Fox Equation, and
when the average number of the boronic acid-containing group or the diol group bonded to another polymer unit per molecule of the polymer unit is N, N satisfies the following relational expression.

[Mathematical formula 2]

$$N > 0.02 + 4\left({}^{c}/_{c^*}\right)^{1.5}$$

## Patentansprüche

**1.** Nicht geliertes Polymermaterial, enthaltend ein Lösungsmittel, wobei das nicht gelierte Polymermaterial eine dreidimensionale Struktur aufweist, in der eine Vielzahl von Polymereinheiten verknüpft sind, wobei das nicht gelierte Polymermaterial eine erste Region und eine zweite Region umfasst, die in einem phasengetrennten Zustand vorliegen, wobei die Konzentration der Polymereinheiten, die in der ersten Region vorliegen, größer als in der zweiten Region ist,

wobei die Polymereinheit eine A-Gruppe der Polymereinheit, umfassend ein oder mehrere verzweigte Polymere mit insgesamt zwei oder mehr boronsäurehaltigen Gruppen in einer Seitenkette oder einem Endpunkt, und eine B-Gruppe der Polymereinheit, umfassend ein oder mehrere verzweigte Polymere mit insgesamt zwei oder mehr Diolgruppen in einer Seitenkette oder einem Endpunkt, beinhaltet,
der Durchschnittswert der Anzahl der in den verzweigten Polymeren der A-Gruppe der Polymereinheit vorliegenden boronsäurehaltigen Gruppen pro Molekül in einem Bereich von 3 bis 60 liegt und der Durchschnittswert der Anzahl der in den verzweigten Polymeren der B-Gruppe der Polymereinheit vorliegenden Diolgruppen pro Molekül in einem Bereich von 3 bis 1500 liegt,
eine Gesamtpolymerkonzentration (c) in dem Polymermaterial 0,1 bis 100 g/l beträgt und von $10^{-3}$ bis 5 Mal einer überlappenden Konzentration (c*) der Polymereinheiten reicht, wobei die überlappende Konzentration (c*) durch Messen der Viskosität einer verdünnten Lösung unter Verwendung der Flory-Fox-Gleichung bestimmt wird, und

wenn die durchschnittliche Anzahl der boronsäurehaltigen Gruppe oder der Diolgruppe, die an eine andere Polymereinheit gebunden ist, pro Molekül der Polymereinheit N beträgt, N den folgenden Beziehungsausdruck erfüllt

[Mathematische Formel 1]

$$N > 0.02 + 4\left({}^{c}/_{c^*}\right)^{1.5}$$

.

2. Polymermaterial nach Anspruch 1, wobei das Lösungsmittel Wasser ist und das verzweigte Polymer, das die A-Gruppe und B-Gruppe der Polymereinheit darstellt, ein hydrophiles Polymer ist.

3. Polymermaterial nach Anspruch 1, wobei das verzweigte Polymer, das die A-Gruppe und B-Gruppe der Polymereinheit darstellt, ein Polyethylenglykol-Skelett oder ein Polyvinyl-Skelett aufweist.

4. Polymermaterial nach Anspruch 1, wobei mindestens eine der A-Gruppe und B-Gruppe der Polymereinheit nur aus zweifach, dreifach, vierfach oder achtfach verzweigten Polyethylenglykolen besteht.

5. Polymermaterial nach Anspruch 1, wobei die boronsäurehaltige Gruppe eine Arylboronsäure, optional mit einem Halogenatom substituiert, ist.

6. Polymermaterial nach Anspruch 1, wobei die Diolgruppe eine ringgeöffnete Struktur eines Saccharidderivats aufweist.

7. Polymermaterial nach Anspruch 1, wobei

die A-Gruppe der Polymereinheit eine Kombination aus Polymeren mit insgesamt vier boronsäurehaltigen Gruppen an einem Endpunkt und Polymeren mit insgesamt acht boronsäurehaltigen Gruppen an einem Endpunkt beinhaltet und
die B-Gruppe der Polymereinheit eine Kombination aus Polymeren mit insgesamt vier Diolgruppen an einem Endpunkt und Polymeren mit insgesamt acht Diolgruppen an einem Endpunkt beinhaltet.

8. Polymermaterial nach Anspruch 1, ferner umfassend ein Konnektivitätseinstellmittel.

9. Polymermaterial nach Anspruch 8, wobei ein Konnektivitätseinstellmittel ausgewählt ist aus der Gruppe bestehend aus einem Saccharid, einem Saccharidderivat und einem pH-Einstellmittel.

10. Kit zum Bilden des Polymermaterials nach einem der Ansprüche 1 bis 9, wobei das Kit Folgendes umfasst:

einen Behälter, der Folgendes getrennt speichert
eine erste Lösung, enthaltend eine A-Gruppe der Polymereinheit, beinhaltend ein oder mehrere verzweigte Polymere mit insgesamt zwei oder mehr boronsäurehaltigen Gruppen in einer Seitenkette oder einem Endpunkt, und
eine zweite Lösung, enthaltend eine B-Gruppe der Polymereinheit, beinhaltend ein oder mehrere verzweigte Polymere mit insgesamt zwei oder mehr Diolgruppen in einer Seitenkette oder einem Endpunkt, wobei
der Durchschnittswert der Anzahl der in den verzweigtkettigen Polymeren der A-Gruppe der Polymereinheit vorliegenden boronsäurehaltigen Gruppen pro Molekül in einem Bereich von 3 bis 60 liegt und der Durchschnittswert der Anzahl der in den verzweigtkettigen Polymeren der B-Gruppe der Polymereinheit vorhandenen Diolgruppen pro Molekül in einem Bereich von 3 bis 1500 liegt, und
die Gesamtpolymerkonzentration (c) in der ersten und zweiten Lösung 0,1 bis 100 g/l beträgt und von $10^{-3}$ bis 5 Mal der überlappenden Konzentration (c*) der Polymereinheiten reicht, wobei die überlappende Konzentration (c*) durch Messen der Viskosität einer verdünnten Lösung unter Verwendung der Flory-Fox-Gleichung bestimmt wird.

11. Kit nach Anspruch 10, wobei mindestens eine der ersten und der zweiten Lösung ferner ein Konnektivitätseinstellmittel enthalten kann.

12. Kit nach Anspruch 11, wobei das Konnektivitätseinstellmittel ausgewählt ist aus der Gruppe bestehend aus einem

Saccharid, einem Saccharidderivat und einem pH-Einstellmittel.

13. Verfahren zur Herstellung des Polymermaterials nach einem der Ansprüche 1 bis 9, wobei das Verfahren Folgendes umfasst:

einen Schritt des Mischens einer A-Gruppe der Polymereinheit, beinhaltend ein oder mehrere verzweigte Polymere mit insgesamt zwei oder mehr boronsäurehaltigen Gruppen in einer Seitenkette oder einem Endpunkt, einer B-Gruppe der Polymereinheit, beinhaltend ein oder mehrere Polymere mit insgesamt zwei oder mehr Diolgruppen in einer Seitenkette oder einem Endpunkt, und ein Lösungsmittel zur Herstellung einer Polymerlösung, wobei
der Durchschnittswert der Anzahl der in den verzweigtkettigen Polymeren der A-Gruppe der Polymereinheit vorliegenden funktionellen Gruppen pro Molekül in einem Bereich von 3 bis 60 liegt und der Durchschnittswert der Anzahl der in den verzweigtkettigen Polymeren der B-Gruppe der Polymereinheit enthaltenen funktionellen Gruppen pro Molekül in einem Bereich von 3 bis 1500 liegt,
die Polymerkonzentration (c) in der Polymerlösung 0,1 bis 100 g/l beträgt und von $10^{-3}$ bis 5 Mal der überlappenden Konzentration (c*) der Polymereinheiten reicht, wobei die überlappende Konzentration (c*) durch Messen der Viskosität einer verdünnten Lösung unter Verwendung der Flory-Fox-Gleichung bestimmt wird, und
wenn die durchschnittliche Anzahl der boronsäurehaltigen Gruppe oder der Diolgruppe, die an eine andere Polymereinheit gebunden ist, pro Molekül der Polymereinheit N beträgt, N den folgenden Beziehungsausdruck erfüllt

[Mathematische Formel 2]

$$N > 0.02 + 4\left(c/_{c^*}\right)^{1.5}$$

.

**Revendications**

1. Matériau polymère non gélifié contenant un solvant, le matériau polymère non gélifié présentant une structure tridimensionnelle dans laquelle une pluralité d'unités polymères sont liées, dans lequel le matériau polymère non gélifié comprend une première zone et une seconde zone qui sont présentes dans un état de séparation de phases, dans lequel la concentration des unités polymères présentes dans la première zone est supérieure à celle dans la seconde zone,

dans lequel l'unité polymère comprend un groupe A d'unités polymères comprenant un ou plusieurs polymères ramifiés comportant au total deux groupes contenant de l'acide boronique ou plus dans une chaîne latérale ou à une extrémité, et un groupe B d'unités polymères comprenant un ou plusieurs polymères ramifiés comportant au total deux groupes diol ou plus dans une chaîne latérale ou à une extrémité,
la valeur moyenne du nombre de groupes contenant de l'acide boronique par molécule présents dans les polymères ramifiés du groupe A d'unités polymères est comprise dans une plage de 3 à 60, et la valeur moyenne du nombre de groupes diol par molécule présents dans les polymères ramifiés du groupe B d'unités polymères est comprise dans une plage de 3 à 1500,
une concentration totale en polymère (c) dans le matériau polymère est de 0,1 à 100 g/l et varie de $10^{-3}$ à 5 fois une concentration de recouvrement (c*) des unités polymères, dans lequel la concentration de recouvrement (c*) est déterminée en mesurant la viscosité d'une solution diluée à l'aide de l'équation de Flory-Fox, et
lorsque le nombre moyen du groupe contenant de l'acide boronique ou du groupe diol lié à une autre unité polymère par molécule de l'unité polymère est N, N satisfait à l'expression relationnelle suivante

[Formule mathématique 1]

$$N > 0.02 + 4\left(c/_{c^*}\right)^{1.5}$$

.

2. Matériau polymère selon la revendication 1, dans lequel le solvant est l'eau, et le polymère ramifié constituant le groupe A et le groupe B d'unités polymères est un polymère hydrophile.

**3.** Matériau polymère selon la revendication 1, dans lequel le polymère ramifié constituant le groupe A et le groupe B d'unités polymères possède un squelette de polyéthylène glycol ou un squelette de polyvinyle.

**4.** Matériau polymère selon la revendication 1, dans lequel au moins l'un du groupe A et du groupe B d'unités polymères est composé uniquement de polyéthylène glycols bi-, tri-, tétra- ou octa-ramifiés.

**5.** Matériau polymère selon la revendication 1, dans lequel le groupe contenant de l'acide boronique est un acide arylboronique éventuellement substitué par un atome d'halogène.

**6.** Matériau polymère selon la revendication 1, dans lequel le groupe diol présente une structure à cycle ouvert d'un dérivé de saccharide.

**7.** Matériau polymère selon la revendication 1, dans lequel

le groupe A d'unités polymères comprend une combinaison de polymères comportant au total quatre groupes contenant de l'acide boronique à une extrémité et de polymères comportant au total huit groupes contenant de l'acide boronique à une extrémité, et
le groupe B d'unités polymères comprend une combinaison de polymères comportant au total quatre groupes diol à une extrémité et de polymères comportant au total huit groupes diol à une extrémité.

**8.** Matériau polymère selon la revendication 1, comprenant en outre un agent d'ajustement de connectivité.

**9.** Matériau polymère selon la revendication 8, dans lequel un agent d'ajustement de connectivité est choisi dans le groupe constitué par un saccharide, un dérivé de saccharide et un agent d'ajustement du pH.

**10.** Kit destiné à former le matériau polymère selon l'une quelconque des revendications 1 à 9, le kit comprenant :

un récipient stockant séparément
une première solution contenant un groupe A d'unités polymères comprenant un ou plusieurs polymères ramifiés comportant au total deux groupes contenant de l'acide boronique ou plus dans une chaîne latérale ou à une extrémité, et
une seconde solution contenant un groupe B d'unités polymères comprenant un ou plusieurs polymères ramifiés comportant au total deux groupes diol ou plus dans une chaîne latérale ou à une extrémité, dans lequel
la valeur moyenne du nombre de groupes contenant de l'acide boronique par molécule présents dans les polymères à chaîne ramifiée du groupe A d'unités polymères est comprise dans une plage de 3 à 60, et la valeur moyenne du nombre de groupes diol par molécule présents dans les polymères à chaîne ramifiée du groupe B d'unités polymères est comprise dans une plage de 3 à 1500, et
la concentration totale en polymère (c) dans les première et seconde solutions est de 0,1 à 100 g/l et varie de $10^{-3}$ à 5 fois la concentration de recouvrement (c*) des unités polymères, dans lequel la concentration de recouvrement (c*) est déterminée en mesurant la viscosité d'une solution diluée à l'aide de l'équation de Flory-Fox.

**11.** Kit selon la revendication 10, dans lequel au moins l'une des première et seconde solutions peut en outre contenir un agent d'ajustement de connectivité.

**12.** Kit selon la revendication 11, dans lequel l'agent d'ajustement de connectivité est choisi dans le groupe constitué par un saccharide, un dérivé de saccharide et un agent d'ajustement du pH.

**13.** Procédé permettant la production du matériau polymère selon l'une quelconque des revendications 1 à 9, le procédé comprenant :

une étape de mélange d'un groupe A d'unités polymères comprenant un ou plusieurs polymères ramifiés comportant au total deux groupes contenant de l'acide boronique ou plus dans une chaîne latérale ou à une extrémité, d'un groupe B d'unités polymères comprenant un ou plusieurs polymères comportant au total deux groupes diol ou plus dans une chaîne latérale ou à une extrémité, et d'un solvant pour préparer une solution de polymère, dans lequel
la valeur moyenne du nombre de groupes fonctionnels par molécule présents dans les polymères à chaîne ramifiée du groupe A d'unités polymères est comprise dans une plage de 3 à 60, et la valeur moyenne du nombre de groupes fonctionnels par molécule présents dans les polymères à chaîne ramifiée du groupe B d'unités

polymères est comprise dans une plage de 3 à 1500,
la concentration en polymère (c) dans la solution de polymère est de 0,1 à 100 g/l et varie de $10^{-3}$ à 5 fois la concentration de recouvrement (c*) des unités polymères, dans lequel la concentration de recouvrement (c*) est déterminée en mesurant la viscosité d'une solution diluée à l'aide de l'équation de Flory-Fox, et
lorsque le nombre moyen du groupe contenant de l'acide boronique ou du groupe diol lié à une autre unité polymère par molécule de l'unité polymère est N, N satisfait à l'expression relationnelle suivante

[Formule mathématique 2]

$$N > 0.02 + 4\left({}^{c}/_{c^{*}}\right)^{1.5}$$

*FIG. 1*

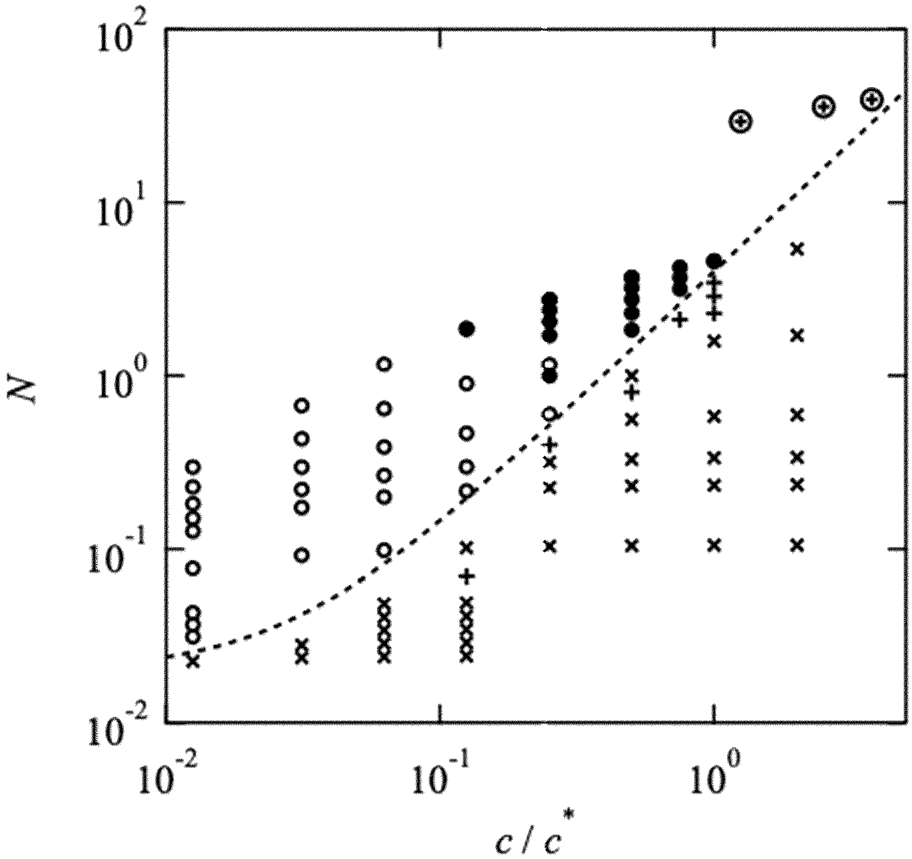

FIG. 2

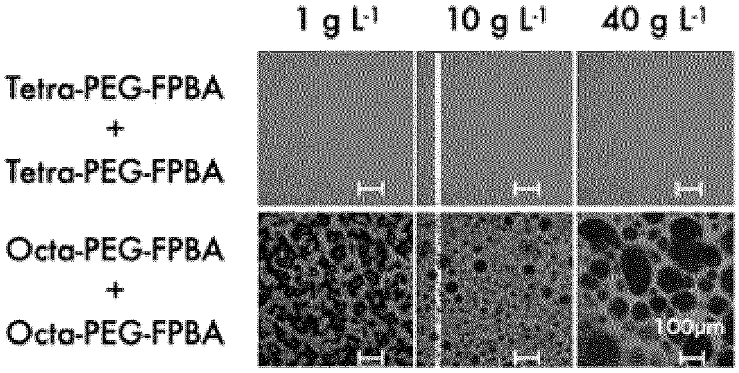
1 g L-1
10 g L-1
40 g L-1
Tetra-PEG-FPBA
+
Tetra-PEG-FPBA
Octa-PEG-FPBA
+
Octa-PEG-FPBA
100μm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012500208 B
- CN 109575269
- CN 109721744
- CN 111138687
- WO 2022092043 A
- CN 112851983
- WO 2007083522 A


### Non-patent literature cited in the description


- **RAINER G et al.** *Br J Ophthalmol*, 2001, vol. 85, 139-142
- **OOKI T et al.** *Developmental Cell*, 2019, vol. 49, 590-604
- **MATSUNAGA et al.** *Macromolecules*, 2009, vol. 42 (4), 1344-1351
- **RAUSCHKOLB et al.** *Biointerface Research in Applied Chemistry*, 2021